# EUROPÄISCHE PATENTSCHRIFT

(11) **EP 2 894 354 B1**
(45) Veröffentlichungstag und Bekanntmachung des Hinweises auf die Patenterteilung: **15.08.2018**
(21) Anmeldenummer: 14004228.4
(22) Anmeldetag: 15.12.2014
(51) Int. Cl.: F16B 13/08

(54) **BEFESTIGUNGSELEMENT**
FASTENING ELEMENT
ÉLÉMENT DE FIXATION

(30) Priorität: 13.12.2013 DE 102013021153
(43) Veröffentlichungstag der Anmeldung: 15.07.2015
(73) Patentinhaber: TOX-Dübel-Technik GmbH, 72505 Krauchenwies (DE)
(72) Erfinder: Aleker, Hubert, D-89597 Munderkingen (DE); Karotsch, Bernd, D-78351 Bodmann-Ludwigshafen (DE); Wilhelm, Daniel, D-88690 Uhldingen (DE); Schmid, Dieter, D-78333 Stockach (DE); Dietz, Christoph, D-88512 Mengen (DE)
(74) Vertreter: Feldkamp, Rainer

(56) Entgegenhaltungen:
- DE-A1- 2 204 592
- DE-A1- 4 231 313
- DE-U1-202005 011 420

## Beschreibung

Die Erfindung bezieht sich auf ein Befestigungselement der im Oberbegriff des Anspruchs 1 genannten Art.

Es ist allgemein bekannt, nachträgliche Befestigungen mit Hilfe von Verankerungselementen, wie Spreizdübeln, Bolzenankern, chemischen Dübeln und dergleichen und mit passenden Verbindungselementen wie zum Beispiel Schrauben, Gewindestangen u.s.w. auszuführen. Bei den meisten Verankerungssystemen entsteht zwischen dem Verankerungselement und der Bohrung in dem Baustoff eine Kraft- oder formschlüssige Verbindung. Die an dem Baustoffkörper zu befestigenden Bauteile werden gegen den Verankerungsuntergrund verspannt.

In vielen Fällen ist eine Abstandsmontage erwünscht, bei der der zu befestigende Gegenstand in einem definierten Abstand zum Untergrund gehalten wird. Abstandsmontagen werden zum Beispiel aus optischen Gründen oder dann eingesetzt, wenn sich zwischen der Oberfläche des Baustoffkörpers und dem anzubringenden Gegenstand eine nicht tragende Schicht befindet. Um den zu befestigenden Gegenstand im Abstand von dem Baustoffkörper zu halten, werden zwischen dessen Oberfläche und dem Gegenstand entweder Abstandshalter eingesetzt, die das Verschieben des Bauteils entlang der Schraube über den gewünschten Abstand hinaus verhindern, oder der Gegenstand kann aufgrund seiner geometrischen Form nicht verschoben werden. Bei diesen Lösungen ist es erforderlich, dass die zur Befestigung des Gegenstandes dienenden Verbindungselemente an Ort und Stelle auf die erforderliche Länge gekürzt werden müssen, oder das ein Vorrat von unterschiedlich langen Verbindungselementen vorgehalten werden muss.

Aus der EP 2317158 B1 ist ein Befestigungselement für eine Abstandsmontage bekannt, bei dem ein rohrförmiges Verankerungselement in dem Baustoffkörper, beispielsweise einer Wand oder Decke befestigt wird und an seinem freien, aus einer dem Baustoffkörper bedeckenden Dämmstoffschicht herausragenden Ende mit einer Umspritzung aus wärmeisolierendem Kunststoffmaterial versehen ist, die eine Aufnahmebohrung zur Aufnahme eines Befestigungsmittels, wie einer Schraube, zur Befestigung eines in der Außenfläche der Dämmstoffschicht befestigenden Gegenstandes aufweist. Hierbei muss das rohrförmige Verankerungselement und/oder die Umspritzung sehr genau an die Bohrlochtiefe beziehungsweise Dicke der Dämmschicht angepasst werden.

Aus der DE 102012106311 A1 ist weiterhin ein Befestigungselement bekannt, bei dem das Verankerungselement eine Stange ist, die aus dem aus dem Baukörper herausragenden Ende mit Gewinde versehen ist, auf das ein Isolierkörper aufschraubbar ist, der eine erste Gewindebohrung zum Aufschrauben auf das Gewinde der Stange und eine zweite Gewindebohrung zum Einschrauben eines Befestigungsmittels zur Befestigung eines Gegenstandes auf der Außenseite der Dämmstoffschicht ermöglicht. Auf diese Weise wird eine thermische Isolierung zwischen dem auf der Außenseite der Dämmstoffschicht befestigten Gegenstand und der Wand des Baustoffkörpers ermöglicht. Durch die Gewindeverbindung zwischen dem stangenförmigen Verankerungselement und dem Isolierstoffkörper ist eine begrenzte Einstellung der Gesamtlänge des aus der Verankerungsstange und dem Isolierstoffkörper bestehenden Befestigungselementes möglich, doch ist in den meisten Fällen immer noch eine Anpassung der Länge des Verankerungselementes an die Dicke der Dämmstoffschicht durch entsprechendes Verkürzen des Verankerungselementes erforderlich.

Aus der DE 2204592 A1 ist ein Befestigungselement bekannt, bei dem ein Bolzen, dessen Querschnittsfläche eine spiralenförmige Umfangslinie besitzt, in eine Spreizhülse eingesetzt wird, deren Querschnittsfläche innen von einer spiralenförmigen und außen von einer kreisförmigen Umfangslinie begrenzt wird, wobei die Spreizhülse durch Verdrehen des Bolzens über der Spreizhülse aufgespreizt wird. Die Kombination aus Bolzen und Spreizhülse weist hierbei jedoch eine vorgegebene Länge auf und eine Anpassung der Länge des Verankerungselementes an die Dicke der Dämmstoffschicht ist nicht möglich.

Die Erfindung liegt die Aufgabe zugrunde, ein Befestigungselement der eingangs genannten Art zu schaffen, bei dem sich das Verbindungselement über eine einstellbare gewünschte Länge aus dem Verankerungselement heraus erstrecken kann.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Das erfindungsgemäße Befestigungselement zur Befestigung eines Gegenstandes an einem Baustoffkörper umfaßt ein langgestrecktes Verankerungselement, das in einem Bohrloch in dem Baustoffkörper zu verankern ist und eine entlang seiner Längsmittelachse in Längsrichtung verlaufende Bohrung aufweist, in die ein Verbindungselement einsteckbar ist, das zur Befestigung in der Bohrung des Verankerungselementes ausgebildet ist und zur Befestigung des Gegenstandes an dem Baustoffkörper dient.

Die Bohrung des Verankerungselementes weist über zumindest einen Teil ihrer Länge einen Querschnitt mit sich bezogen auf die Längsmittelachse in Umfangsrichtung kontinuierlich von einem minimalen Radius auf einen maximalen Radius vergrößernden Radius auf, der über eine Stufe wieder auf den minimalen Radius übergeht, wobei das Verbindungselement über einen Teil seiner Länge einen zu der Bohrung komplementären Querschnitt mit sich bezogen auf die Längsmittelachse in Umfangsrichtung kontinuierlich von einem minimalen Radius auf einen maximalen Radius vergrößernden Radius aufweist, wobei die minimalen und maximalen Radien des Verankerungselementes bzw. des Verbindungselementes im Wesentlichen gleich sind, derart, dass ein Einstecken des Verbindungselementes in das Verankerungselement in eine einstellbare Tiefe ermöglicht wird und ein Verdrehen des Verbindungselementes gegenüber dem Verankerungselement ein Verspannen des Verbindungselementes gegen den Innendurchmesser der Bohrung des Verankerungselementes bewirkt. Der Außendurchmesser des Verbindungselementes (1) durch eine Umspritzung gebildet ist, die den sich von einem minimalen Radius (R3) auf den maximalen Radius (R4) vergrößernden Radius des Querschnittes aufweist.

Durch die erfindungsgemäße Ausgestaltung des Befestigungselementes ist es möglich, das Verbindungselement gegenüber dem Verankerungselement auf eine gewünschte Tiefe zu verschieben und dann durch ein Verdrehen des Verbindungselementes gegenüber dem Verankerungselement zu verspannen, so dass keine weitere Längsverschiebung des Verbindungselementes gegenüber dem Verankerungselement möglich ist. Gegebenenfalls kann durch Rückwärtsdrehen des Verbindungselementes die Verspannung gelöst werden und das Verbindungselement auf eine neue Tiefe eingestellt werden.

Gemäß einer Ausgestaltung der Erfindung ist vorgesehen, dass der Querschnitt der Bohrung des Verankerungselementes und der Querschnitt des Verbindungselementes bezogen auf die Längsmittelachse in Umfangsrichtung einen sich mehrfach kontinuierlich von einem minimalen Radius auf einen maximalen Radius (R2) vergrößernden Radius und sich wieder auf einen minimalen Radius verringernden Radius aufweist

Gemäß einer anderen Ausgestaltung der Erfindung kann der sich bezogen auf die Längsmittelachse in Umfangsrichtung kontinuierlich von einem minimalen Radius auf einen maximalen Radius vergrößernde Radius des Querschnittes der Bohrung des Verankerungselementes und des Querschnittes des Verbindungselementes durch jeweilige exzentrische Bereiche des Querschnittes der Bohrung des Verankerungselementes und des Querschnittes des Verbindungselementes gebildet sein.

Sowohl das Verbindungselement als auch das Verankerungselement kann aus Metall, Kunststoff, Holz oder Verbundwerkstoffen bestehen.

Das Verbindungselement weist die Umspritzung nur über einen Teil seiner Länge auf, wobei der von der Umspritzung freie Teil aus dem Verankerungselement herausragt.

Der aus dem Verankerungselement herausragende Teil des Verbindungselementes ist vorzugsweise mit einem Werkzeugansatz in Form einer unrunden Ausnehmung oder Abflachungen versehen, um den Angriff eines Werkzeuges zum Verdrehen des Verbindungselementes gegenüber dem Verankerungselement in einfacher Weise zu ermöglichen.

Ausführungsbeispiele der Erfindung werden im folgenden anhand der Zeichnung noch näher erläutert.

In der Zeichnung zeigen:
Figur 1 eine schematische Querschnittsansicht des Verankerungselementes und des Verbindungselementes in einer Bohrung in einem Baustoffkörper im unverspannten Zustand.
Figur 2 eine Darstellung ähnlich der Figur 1, bei der das Verbindungselement gegenüber dem Verankerungselement um einen Winkel verdreht und gegenüber dem Verankerungselement verspannt ist.
Figur 3 eine schematische Längsschnittansicht des Verbindungselementes und des Verankerungselementes des Befestigungselementes.

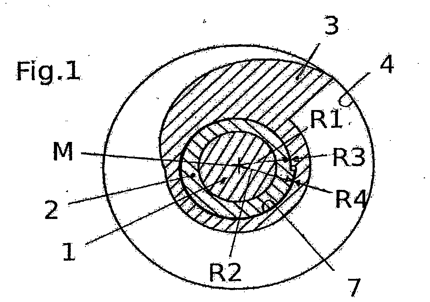

In den Figuren 1 bis 3 ist eine Ausführungsform des Befestigungselementes gezeigt, bei der ein Verbindungselement 1 in einem nur schematisch dargestellten Verankerungselement 3 angeordnet ist, das seinerseits in einem Bohrloch 4 eines nicht gezeigten Baustoffkörpers verankert ist.

Diese Verankerung kann durch entsprechende Widerhaken, durch Verkleben oder dergleichen in bekannter Weise in dem Bohrloch 4 des Baustoffkörpers erfolgen.

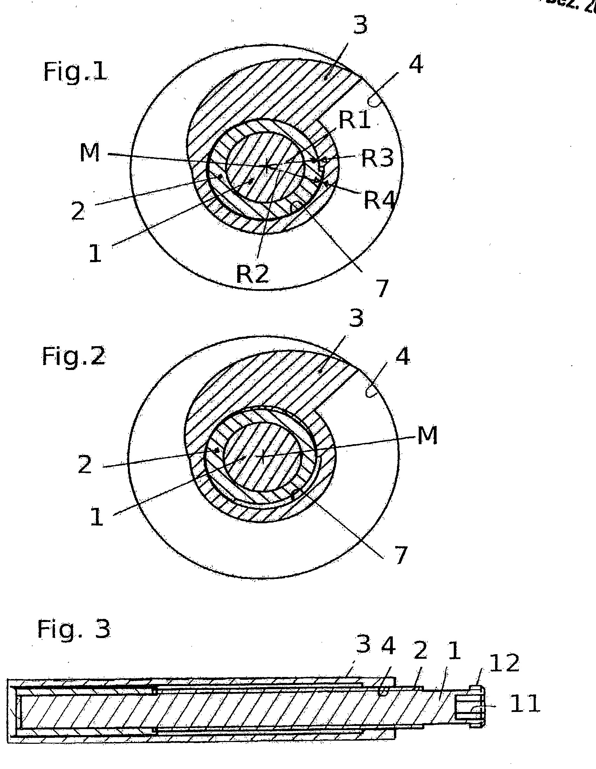

Wie dies aus einem Vergleich der Figuren 1 und 2 zu erkennen ist, vergrößert sich der Radius des Innendurchmessers der Bohrung 7 des Verankerungselementes 3 bezogen auf die Längsmittelachse M des Verbindungselementes (1) bzw. der Bohrung 4 gegen den Uhrzeigersinn ausgehend von einem minimalen Radius R1 auf einen maximalen Radius R2, wobei der minimale Radius in den maximalen Radius über eine Stufe übergeht.

Das Verbindungselement 1 weist über zumindest einen Teil seiner Länge einen Außenumfang auf, dessen Radius sich bezogen auf die Längsmittelachse des Befestigungselementes in komplementärer Weise zu der Bohrung 7 des Verankerungselementes 3 gegen den Uhrzeigersinn ausgehend von einem minimalen Radius R3 auf einen maximalen Radius R4 vergrößert, wobei die minimalen Radien und die maximalen Radien des Verankerungselementes 3 beziehungsweise des Verbindungselementes 1 im Wesentlichen gleich sind, so dass das Verbindungselement 1 in die Bohrung 7 des Verankerungselementes 3 eingesteckt und auf eine gewünschte Tiefe in dem Verankerungselement 3 verschoben werden kann, so dass der aus dem Verankerungselement 3 herausragende Teil des Verbindungselementes 1 eine gewünschte Länge aufweist.

Der Außendurchmesser des Verbindungselementes 1 ist vorzugsweise durch eine Umspritzung 2 gebildet, wobei das Verbindungselement 1 selbst zylindrisch ausgebildet sein kann und der sich von einem minimalen Radius R3 auf einen maximalen Radius R4 vergrößernde Radius in der Umspritzung 2 verwirklicht ist. Wie dies aus Figur 3 zu erkennen ist, weist das Verbindungselement 1 an seinem aus dem Verankerungselement 3 herausragenden Teil einen Werkzeugansatz in Form einer unrunden Ausnehmung 10 und/oder einer unrunden Erweiterung 11 oder von Abflachungen auf, die den Ansatz eines Werkzeuges ermöglichen, um das Verbindungselement 1 gegenüber dem Verankerungselement 3 zu verdrehen.

## Patentansprüche

1. Befestigungselement zur Befestigung eines Gegenstandes an einem Baustoffkörper, mit einem langgestreckten Verankerungselement (3), das in einem Bohrloch (4) in dem Baustoffkörper zu verankern ist und eine entlang seiner Längsmittelachse in Längsrichtung verlaufende Bohrung (7) aufweist, in die ein Verbindungselement (1) einsteckbar ist, das zur Befestigung in der Bohrung (7) des Verankerungselementes (3) ausgebildet ist und zur Befestigung des Gegenstandes an dem Baustoffkörper dient, wobei die Bohrung (7) des Verankerungselementes (3) über zumindest einen Teil ihrer Länge einen Querschnitt mit sich bezogen auf auf die Längsmittelachse (M) in Umfangsrichtung kontinuierlich von einem minimalen Radius (R1) auf einen maximalen Radius (R2) vergrößernden Radius aufweist, der über eine Stufe wieder auf den minimalen Radius übergeht, dass das Verbindungselement (1) über einen Teil seiner Länge einen zu der Bohrung (7) komplementären Querschnitt mit sich bezogen auf die Längsmittelachse (M) in Umfangsrichtung kontinuierlich von einem minimalen Radius (R3) auf einen maximalen Radius (R4) vergrößernden Radius aufweist, wobei die minimalen und maximalen Radien (R1, R3/R2, R4) des Verankerungselementes (3) bzw. des Verbindungselementes (1) im Wesentlichen gleich sind, derart, dass ein Verdrehen des Verbindungselementes (1) gegenüber dem Verankerungselement (3) ein Verspannen des Verbindungselementes (1) gegen den Innendurchmesser der Bohrung (7) des Verankerungselementes (3) bewirkt,
**dadurch gekennzeichnet, dass** der Querschnitt der Bohrung des Verankerungselementes und der Querschnitt des Verbindungselementes bezogen auf die Längsmittelachse (M) in Umfangsrichtung einen sich mehrfach kontinuierlich von einem minimalen Radius (R1/R3) auf einen maximalen Radius (R2/R4) vergrößernden Radius und sich wieder auf einen minimalen Radius verringernden Radius aufweist, dass der Außendurchmesser des Verbindungselementes (1) durch eine Umspritzung gebildet ist, die den sich von einem minimalen Radius (R3) auf den maximalen Radius (R4) vergrößernden Radius des Querschnittes aufweist, wobei das Verbindungselement (1) die Umspritzung (2) über einen Teil seiner Länge derart aufweist, dass der von der Umspritzung (2) freie Teil aus dem Verankerungselement (3) herausragt und ein Einstecken des Verbindungselementes (1) in das Verankerungselement (3) in eine einstellbare Tiefe ermöglicht.

2. Befestigungselement nach Anspruch 1, **dadurch gekennzeichnet, dass** der sich bezogen auf die Längsmittelachse in Umfangsrichtung kontinuierlich von einem minimalen Radius (R1/R3) auf einen maximalen Radius (R2/R4) vergrößernde Radius des Querschnittes der Bohrung des Verankerungselementes (3) und des Querschnittes des Verbindungselementes durch jeweilige exzentrische Bereiche des Querschnittes der Bohrung des Verankerungselementes (3) und des Querschnittes des Verbindungselementes (1) gebildet sind.

3. Befestigungselement nach Anspruch 1 oder 2, **dadurch gekennzeichnet, dass** das aus dem Verankerungselement (3) herausragende Ende des Verbindungselementes (1) einen Werkzeugansatz in Form einer unrunden Ausnehmung (11) und/oder von Abflachungen (12) aufweist.

4. Befestigungssystem nach einem der vorhergehenden Ansprüche, **dadurch gekennzeichnet, dass** das Verankerungselement (3) an seinem Außenumfang mit Verankerungsvorsprüngen zur Verankerung des Verankerungselementes in dem Bohrloch (4) in dem Baustoffkörper versehen ist.

5. Befestigungselement nach einem der vorhergehenden Ansprüche, **dadurch gekennzeichnet, dass** das Verankerungselement (3) in dem Bohrloch (4) in dem Baustoffkörper verklebt ist.

## Claims

1. A fastening element for fastening an object to a building material body, comprising a longitudinal anchoring element (3) to be anchored in a borehole (4) in the building material body and having a hole (7) extending along its longitudinal center axis in the longitudinal direction, into which hole a connecting element (1) can be inserted that is designed for fastening in the hole (7) of the anchoring element (3) and serves for fastening the object to the building material body, wherein the hole (7) of the anchoring element (3) has a cross-section, at least over a part of its length, with a radius which increases continuously with respect to the longitudinal center axis (M) in the circumferential direction from a minimum radius (R1) to a maximum radius (R2), which radius transitions again into the minimum radius via a step, and the connecting element (1) has a cross-section, over a part of its length, that is complementary to the hole (7) and has a radius which increases continuously with respect to the longitudinal center axis (M) in the circumferential direction from a minimum radius (R3) to a maximum radius (R4), wherein the minimum and maximum radii (R1, R3/R2, R4) of the anchoring element (3) and the connecting element (1), respectively, are substantially equal such that turning the connecting element (1) with respect to the anchoring (3) causes bracing of the connecting element (1) against the inner diameter of the hole (7) of the anchoring element (3),
**characterized in that** the cross-section of the hole of the anchoring element and the cross-section of the connecting element have a radius which, with respect to the longitudinal center axis (M), increases continuously multiple times in the circumferential direction from a minimum radius (R1/R3) to a maximum radius (R2/R4) and decreases again to a minimum radius, that the outer diameter of the connecting element (1) is formed by an overmolding having the radius of the cross-section that increases from a minimum radius (R3) to the maximum radius (R4), wherein the connecting element (1) comprises the overmolding (2) over a part of its length in such a manner that the part exposed from the overmolding (2) protrudes out of the anchoring element (3) and enables inserting the connecting element (1) into the anchoring element (3) to an adjustable depth,

2. The fastening element according to claim 1, **characterized in that** the radius of the cross-section of the hole of the anchoring element (3) and of the cross-section of the connecting element, which radii increase continuously with respect to the longitudinal center axis in the circumferential direction from a minimum radius (R1/R3) to a maximum radius (R2/R4), are formed by respective eccentric regions of the cross-section of the hole of the anchoring element (3) and the cross-section of the connecting element (1).

3. The fastening element according to claim 1 or 2, **characterized in that** the end of the connecting element (1) protruding out of the anchoring element (3) has a tool joint in the form of a noncircular recess (11) and/or flattenings (12).

4. The fastening system according to any one of the preceding claims, **characterized in that** the anchoring element (3) is provided on its outer circumference with anchoring projections for anchoring the anchoring element in the borehole (4) in the building material body.

5. The fastening element according to any one of the preceding claims, **characterized in that** the anchoring element (3) in the borehole (4) is glued in the building material body.

## Revendications

1. Elément de fixation pour la fixation d'un objet à un corps de matériau de construction, avec un élément d'ancrage (3) allongé, qui est à ancrer dans un trou de forage (4) dans le corps du matériau de construction et comporte un forage (7) passant le long de son axe médian longitudinal dans le sens longitudinal, dans lequel un élément de liaison (1) peut être introduit, qui est constitué pour la fixation dans le forage (7) de l'élément d'ancrage (1) et sert à la fixation de l'objet sur le corps de matériau de construction, le forage (7) de l'élément d'ancrage (3) comportant sur au moins une partie de sa longueur une section transversale avec un rayon s'agrandissant en continu d'un rayon minimal (R1) à un rayon maximal (R2) dans le sens périphérique en référence à l'axe médian longitudinal (M), qui passe sur un niveau à nouveau sur le rayon minimal de sorte que l'élément de liaison (1) comporte sur une partie de sa longueur une section transversale complémentaire au forage (7) avec un rayon s'agrandissant en continu d'un rayon minimal (R3) à un rayon maximal (R4) dans le sens périphérique en référence à l'axe médian longitudinal (M), les rayons minimal et maximal (R1, R3/R2, R4) de l'élément d'ancrage (3) ou de l'élément de liaison (1) étant pour l'essentiel identiques de telle sorte qu'une rotation de l'élément de liaison (1) par rapport à l'élément d'ancrage (3) entraîne un serrage de l'élément de liaison (1) contre le diamètre intérieur du forage (7) de l'élément d'ancrage (3),
**caractérisé en ce que** la section transversale du forage de l'élément d'ancrage et la section transversale de l'élément de liaison comportent un rayon s'agrandissant plusieurs fois dans le sens périphérique en continu d'un rayon minimal (R1/R3) à un rayon maximal (R2/R4) en référence à l'axe médian longitudinal (M) et un rayon se réduisant à nouveau sur un rayon minimal, **en ce que** le diamètre extérieur de l'élément de liaison (1) est formé par un enrobage par injection, qui comporte le rayon de la section transversale s'agrandissant d'un rayon minimal (R3) au rayon maximal (R4), l'élément de liaison (1) comportant l'enrobage par injection (2) sur une partie de sa longueur de telle sorte que la partie libre de l'enrobage par injection (2) dépasse de l'élément d'ancrage (3) et permet une introduction de l'élément de liaison (1) dans l'élément d'ancrage (3) à une profondeur ajustable.

2. Elément de fixation selon la revendication 1, **caractérisé en ce que** le rayon de la section transversale du forage de l'élément d'ancrage (3) s'agrandissant, en continu dans le sens périphérique d'un rayon minimal (R1/R3) à un rayon maximal (R2/R4) en référence à l'axe médian longitudinal et de la section transversale de l'élément de liaison sont formés par des zones excentriques respectives de la section transversale du forage de l'élément d'ancrage (3) et de la section transversale de l'élément de liaison (1),

3. Elément de fixation selon la revendication 1 ou 2, **caractérisé en ce que** l'extrémité de l'élément de liaison (1) dépassant de l'élément d'ancrage (3) comporte un embout d'outil sous la forme d'un évidement ovalisé (11) et/ou de méplats (12).

4. Système de fixation selon l'une quelconque des revendications précédentes, **caractérisé en ce que** l'élément d'ancrage (3) est doté sur sa périphérie extérieure de saillies d'ancrage pour ancrer l'élément d'ancrage dans le trou de forage (4) dans le corps de matériau de construction.

5. Elément de fixation selon l'une quelconque des revendications précédentes, **caractérisé en ce que** l'élément d'ancrage (3) est collé dans le trou de forage (4) dans le corps du matériau de construction.
